Europäisches Patentamt

(19) European Patent Office

Office européen des brevets

(11) Numéro de publication: **0 1 1 9 883**
**B1**

(12) FASCICULE DE BREVET EUROPEEN

(45) Date de publication du fascicule du brevet:
15.07.87

(21) Numéro de dépôt: **84400285.7**

(22) Date de dépôt: **10.02.84**

(51) Int. Cl.⁴: **B 23 K 26/02**, G 02 B 23/14

(54) Procédé et dispositif d'alignement d'un faisceau laser par l'intermédiaire de moyens optiques de visée, et procédé de mise en oeuvre du dispositif, pour contrôler l'alignement.

(30) Priorité: **17.02.83 FR 8302582**

(43) Date de publication de la demande:
**26.09.84 Bulletin 84/39**

(45) Mention de la délivrance du brevet:
**15.07.87 Bulletin 87/29**

(84) Etats contractants désignés:
**DE GB IT**

(56) Documents cités:
**AU - B - 488 490**
**FR - A - 2 039 520**
**US - A - 3 569 993**
**US - A - 3 843 865**
**US - A - 4 015 906**

(73) Titulaire: **COMMISSARIAT A L'ENERGIE ATOMIQUE Etablissement de Caractère Scientifique Technique et Industriel, 31/33, rue de la Fédération, F-75015 Paris (FR)**

(72) Inventeur: **Quinque, Claude, 2, rue des Cités, F-93300 Aubervilliers (FR)**
Inventeur: **Merard, René, 64, rue Jules Ferry, F-91430 Igny (FR)**

(74) Mandataire: **Mongrédien, André et al, c/o BREVATOME 25, rue de Ponthieu, F-75008 Paris (FR)**

## Description

La présente invention concerne un procédé et un dispositif d'alignement d'un faisceau laser par l'intermédiaire de moyens optiques de visée, et un procédé de mise en œuvre du dispositif, pour contrôler l'alignement. Elle s'applique notamment à l'usinage par laser dans une enceinte aveugle, c'est-à-dire une enceinte dont l'intérieur ne peut être observé que très difficilement, par exemple une enceinte contenant des matériaux fortement radioactifs et appelée enceinte «à haute activité».

On sait que pour effectuer un usinage par laser d'une pièce située à l'intérieur d'une enceinte à haute activité, il faut permettre à un faisceau, produit par un laser de puissance extérieur à l'enceinte, de traverser le mur de protection de cette enceinte et d'être focalisé sur la pièce à usiner. Il faut par ailleurs envoyer sur la pièce un gaz, comburant ou neutre, et protéger le faisceau, à l'intérieur de l'enceinte, par une paroi matérielle. A cet effet, on peut monter à demeure dans l'enceinte un canal tubulaire, qui traverse le mur de protection, et dont l'extrémité porte des moyens de focalisation du faisceau laser et une buse permettant d'éjecter le gaz sur la pièce. On sait aussi que l'orifice de la buse est de petit diamètre, 1 mm par exemple pour les opérations de découpe. De plus, la longueur du canal peut être très grande et atteindre 25 m par exemple.

Il se pose donc un problème d'alignement, ou positionnement, du faisceau laser sur l'orifice de la buse, cet orifice jouant le rôle de cible. Ce problème est difficile à résoudre, compte tenu de la longueur du canal, de la taille de l'orifice de la buse et du fait que les moyens permettant de réaliser l'alignement doivent être situés à l'extérieur de l'enceinte. Il s'agit également d'un problème important étant donné que l'alignement à réaliser est une condition nécessaire à l'usinage et qu'un faisceau laser mal centré sur l'orifice de la buse risquerait de détériorer celle-ci et de rendre l'usinage impossible.

La présente invention a pour but de résoudre ce problème. Plus généralement, la présente invention a pour but de résoudre le problème du positionnement d'un faisceau laser sur une cible à laquelle on n'a pas accès.

On connaît par le document US-A-4 015 906 une technique d'alignement d'un faisceau laser sur une cible, cet alignement étant obtenu par superposition, sur le réticule d'un microscope, de l'image d'un point d'impact lumineux réfléchi par la cible, avec l'image du pourtour du faisceau laser, défini par réflection de ce dernier sur un miroir annulaire, et rend lumineux par réflection sur un organe apte à s'illuminer sous l'impact du faisceau laser.

La présente invention a tout d'abord pour objet un dispositif d'alignement d'un faisceau laser sur un cibel, ce faisceau laser admettant un point d'émergence sur le laser et un axe d'émission passant par ce point d'émergence, ce dispositif comprenant des moyens mobiles de déplacement du faisceau laser et des moyens optiques de visée, dispositif caractérisé en ce que les moyens optiques de visée sont aptes à effectuer des visées dans deux directions opposées et immobilisables par rapport au laser et en ce que le laser et les moyens optiques de visée sont aptes à effectuer des déplacements relatifs, afin d'effectuer une visée du point d'émergence selon l'une des deux directions, en utilisant des déplacements relatifs du laser et des moyens optiques du visée, puis d'immobiliser ces derniers par rapport au laser et enfin d'effectuer une visée de la cible selon l'autre direction, en utilisant des mouvements des moyens de déplacement du faisceau laser, de façon que celui-ci atteigne la cible lorsqu'il est émis par le laser.

En effet, la visée du point d'émergence suivie de l'immobilisation des moyens optiques de visée par rapport au laser, permet de fixer l'image de ce point d'émergence au centre du viseur dont sont pourvus les moyens optiques de visée. La visée ultérieure de la cible permet de faire coïncider l'image de cette cible avec l'image du point d'émergence dans le viseur. Les deux images étant ainsi confondues, on est sûr qu'en faisant fonctionner le laser, le faisceau que celui-ci émet vient frapper la cible.

Selon une caractéristique particulière du dispositif objet de l'invention, les moyens mobiles de déplacement du faisceau laser comprennent une platine mobile portant le laser.

Selon une autre caractéristique particulière du dispositif objet de l'invention, les moyens mobiles de déplacement du faisceau laser comprennent en outre un miroir mobile prévu pour capter le faisceau laser et pour diriger celui-ci sur la cible.

Selon un mode de réalisation préféré du dispositif objet de l'invention, les moyens optiques de visée comprennent une lunette de visée et des moyens séparateurs de faisceau rendus fixes par rapport à la lunette de visée et aptes, d'une part, à défléchir vers la lunette de visée un faisceau lumineux issu du point d'émergence lorsque celui-ci est éclairé afin d'effectuer la visée de ce point d'émergence et d'autre part, à défléchir vers la lunette de visée un faisceau lumineux issu de la cible lorsque celle-ci est éclairée afin d'effectuer la visée de ladite cible.

Selon une autre caractéristique particulière du dispositif objet de l'invention, les moyens séparateurs de faisceau comportent une lame semi-réfléchissante inclinée sur l'axe d'émission du faisceau laser et rigidement solidaire d'un miroir opposé à la lunette de visée par rapport à la lame semi-réfléchissante.

Selon une autre caractéristique particulière, les moyens séparateurs de faisceau comportent une lame semi-réfléchissante inclinée sur l'axe d'émission du faisceau laser et rigidement solidaire d'un miroir annulaire perpendiculaire à la lame semi-réfléchissante et entourant celle-ci.

Selon une autre caractéristique particulière, la cible est éclairée au moyen d'une source lumineuse auxiliaire associée à des moyens de déflexion de lumière conçus pour permettre l'atteinte desdits moyens optiques de visée par un faisceau

2

lumineux issu de la cible lorsqu'elle est éclairée par la source lumineuse auxiliaire.

Les moyens de déflexion de lumière peuvent, par exemple, être disposés à la suite des moyens séparateurs par rapport au laser et conçus pour permettre l'atteinte desdits moyens séparateurs par un faisceau lumineux issu de la cible lorsqu'elle est éclairée par la source lumineuse auxiliaire.

Selon une autre caractéristique particulière, la sible est défini par un axe de visée passant par cette cible et déterminé par deux repères rigidement solidaires de la cible, de façon à permettre le remplacement de la visée de cette cible par une visée suivant ledit axe de visée.

Enfin, selon une autre caractéristique particulière, la cibel est constituée par l'orifice d'une buse associée à des moyens de focalisation du faisceau laser à travers ledit orifice et située à une extrémité d'un canal prévu pour la propagation du faisceau laser avant que celui-ci n'atteigne la buse et le laser, les moyens de déplacement du faisceau laser et les moyens optiques de visée sont situés à l'extérieur du canal, du côté, de l'autre extrémité de celui-ci.

La présente invention concerne par ailleurs un procédé de repérage de l'axe d'émission d'un faisceau laser issu d'une fenêtre de sortie du laser, perpendiculairement à celle-ci, caractérisé en ce qu'il consiste à orienter par rapport au laser une ensemble constitué par:

– une lunette de visée pourvue d'un axe de visée,

– une source lumineuse auxiliaire de la lunette de visée, apte à émettre un faisceau lumineux coïncidant avec l'axe de visée de la lunette, et

– des moyens de déflexion de lumière aptes à défléchir en direction de la fenêtre de sortie du laser, le faisceau lumineux émis par la source lumineuse auxiliaire, cette dernière, la lunette de visée et les moyens de déflexion de lumière étant rigidement solidaires les uns des autres,

de telle façon que les faisceau lumineux défléchi par les moyens de déflexion subisse une réflexion sur la fenêtre de sortie suivant l'axe d'émission du faisceau laser, en contrôlant cette réflexion au moyen de la lunette de visée.

On simule donc le faisceau laser par autocollimation de la lunette de visée. On procède de préférence ainsi pour effectuer la visée du point d'émergence dont il a été question plus haut.

La présente invention concerne aussi un procédé d'alignement d'un faisceau laser sur une cible, ce faisceau laser admettant un point d'émergence sur le laser, procédé dans lequel on munit le laser de moyens optiques de visée comprenant une source lumineuse auxiliaire, procédé caractérisé en ce que le laser est monté sur une platine, en ce que les moyens optiques de visée sont prévus pour effectuer des visées dans deux directions opposées et pour qu'un faisceau lumineux issu de la source auxiliaire se propage suivant l'une des deux directions, et en ce que:

– on effectue, suivant cette direction, une visée du point d'émergence du faisceau laser ainsi éclairé par la source auxiliaire, à l'aide d'une orientation des moyens optiques de visée par rapport au laser, de manière à simuler le faisceau laser par le faisceau issu de la source auxiliaire,

– on immobilise les moyens optiques de visée par rapport au laser, et

– on effectue une visée, suivant l'autre direction, de la cible éclairée à cet effet, en utilisant des mouvements de la platine et/ou d'un miroir d'orientation du faisceau laser.

La présente invention concerne enfin un procédé de mise en œuvre du dispostif objet de l'invention qui a été mentionné précédemment et dans lequel les moyens optiques de visée comprennent une lunette de visée et des moyens séparateurs de faisceau, procédé caractérisé en ce que pour contrôler en outre l'alignement réalisé, on remplace les moyens séparateurs de faisceau par un miroir annulaire disposé de façon à être traversé par le faisceau laser lorsque le laser fonctionne et à défléchir vers la lunette de visée un faisceau lumineux issu de la cible éclairée par le laser.

Le dispositif objet de l'invention permet donc d'effectuer un réglage (que l'on peut qualifier de «statique», le laser ne fonctionnant pas) du positionnement du faisceau laser, puis un contrôle éventuellement suivi d'un réglage que l'on peut qualifier de «dynamique», de ce positionnement, en cours de fonctionnement du laser. Les visées du point d'émergence et de la cible peuvent être effectuées en observant ce point d'émergence et cette cible par l'intermédiaire des moyens optiques de visée, ceci, à l'œil nu ou par l'intermédiaire d'une caméra de télévision associée à un récepteur de télévision pourvu d'un écran de visualisation.

L'invention sera mieux comprise à la lecture de la description qui suit, d'exemples de réalisation donnés à titre indicatif et non limitatif, en référence aux dessins annexés, sur lesquels:

– la figure 1 est une vue schématique d'un mode de réalisation particulier du dispositif objet de l'invention, appliqué au positionnement d'un faisceau laser d'usinage sur l'orifice d'une buse faisant partie d'une tête d'usinage;

– la figure 2 est une vue schématique d'un mode de réalisation particulier de moyens séparateurs de faisceau faisant partie du dispositif de la figure 1 et de moyens d'éclairage de deux repères que comporte un mode de réalisation particulier de la tête d'usinage et qui permettent une visée indirecte de l'orifice de la buse;

– la figure 3 est une vue schématique dudit mode de réalisation particulier de la tête d'usinage;

– la figure 4 est une vue schématique de moyens permettant de contrôler le positionnement du faisceau issu du laser lorsque ce dernier fonctionne;

– les figures 5 et 6 sont des vues schématiques d'autres modes de réalisation particuliers des moyens d'éclairage des deux repères; et

– la figure 7 est une vue schématique d'un autre mode de réalisation particulier des moyens séparateurs de faisceau.

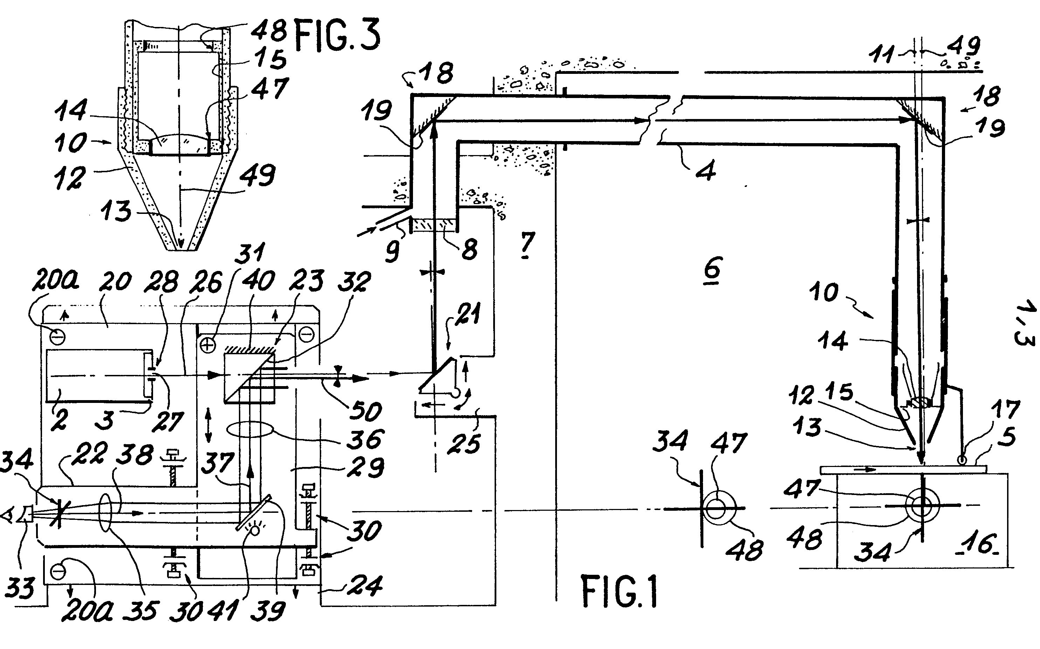

Sur la figure 1, on a représenté schématiquement un mode de réalisation particulier du dispositif objet de l'invention, incorporé à une installation permettant d'usiner, au moyen d'un faisceau laser, des pièces métalliques disposées dans une enceinte à laquelle on n'a pas accès. L'installation considérée comprend essentiellement:

– un laser de puissance 2, par exemple au gaz carbonique, pourvu d'une fenêtre 3 de sortie du faisceau laser, plane et par exemple en SeZn; et

– un canal tubulaire 4, prévu pour la propagation du faisceau issu du laser en fonctionnement.

Chaque pièce 5 à usiner se trouve à l'intérieur d'une enceinte 6 dans laquelle règne une forte radioactivité. Cette enceinte 6 est isolée de l'extérieur par un mur de protection 7. Le canal 4 traverse ce mur de protection 7 et comporte, à son extrémité située à l'extérieur de l'enceinte, une fenêtre plane 8, par exemple en SeZn, destinée à l'entrée du faisceau laser dans le canal 4, ainsi qu'une canalisation 9 communiquant avec ce canal et permettant l'introduction d'un gaz comburant ou neutre dans ledit canal. L'autre extrémité de ce dernier comporte une tête d'usinage 10 rendue mobile en translation suivant l'axe 11 du canal.

La tête 10 est terminée par une buse 12 pourvue d'un orifice 13 et de moyens de focalisation 14 du faisceau laser, montés sur un support 15 à l'intérieur de la tête d'usinage, avant ledit orifice 13. Ces moyens 14 de focalisation sont prévus pour focaliser le faisceau laser, à travers l'orifice 13, sur la pièce 5 qui est par exemple déplaçable sur un support 16, Dans le cas d'une tête d'usinage verticale, une roulette 17, fixée d'un côté à la tête d'usinage 14 et frottant de l'autre sur la pièce 5, permet de maintenir constante la distance entre l'orifice 13 de la buse et cette pièce 5. (Pour ce faire, on peut également utiliser des dispositifs asservis connus dans l'état de la technique, qui permettent de travailler à distance frontale constante et qui sont valables pour une tête d'usinage verticale ou non). Le canal tubulaire 4 peut comporter une pluralité de coudes 18. Des miroirs plans 19 sont alors respectivement associés à ces coudes 18 et disposés à l'intérieur dudit canal 4 de manière à réaliser des déflexions successives du faisceau laser pour que celui-ci parvienne aux moyens de focalisation 14 et traverse, s'il est bien positionné, l'orifice 13. Les moyens 14 de focalisation sont par exemple constitués par une lentille convergente, par exemple en SeZn. Bien entendu, ils pourraient être constitués par d'autres moyens tels qu'un miroir concave de forme parabolique.

L'invention permet donc d'aligner, ou positionner, le faisceau laser sur l'orifice 13 de la buse 12, de manière que ce faisceau soit focalisé sur la pièce 5 à usiner, sans endommager l'orifice 13 et sans intervention d'un opérateur au niveau de la buse 12. Pour ce faire, on ajoute à l'installation d'usinage précédemment décrite le dispositif objet de l'invention dont un mode de réalisation particulier est schématiquement représenté sur la figure 1 et comprend essentiellement:

– des moyens mobiles de déplacement du faisceau laser constitués par une platine 20 portant le laser 2 et par un miroir plan mobile 21, et

– des moyens optiques de visée constitués par une lunette de visée 22 et des moyens séparateurs de faisceau 23.

Les dispositions respectives du laser 2 et du miroir mobile 21 sont telles qu'un faisceau émis par le laser puisse atteindre le miroir mobile 21 et être injecté par celui-ci dans le canal tubulaire 4. La platine 20 portant le laser 2 est déplaçable en translation par rapport à un châssis fixe 24 et le miroir mobile 21 est déplaçable en translation et/ou en rotation par rapport à un support fixe 25, de façon à pouvoir régler la position et l'orientation du faisceau émis par le laser 2. A titre d'exemple, la fenêtre d'entrée 8 du faisceau laser dans le canal 4 est perpendiculaire au plan de la figure 1. La platine 20 portant le laser 2 est déplaçable par rapport au châssis 24 suivant une direction parallèle à une normale à la fenêtre d'entrée 8 et suivant une autre direction perpendiculaire au plan de la figure 1. Elle peut être immobilisée par rapport au châssis 24 au moyen de vis 20a. Le laser 2 est prévu pour émettre un faisceau dirigé suivant un axe 26 appelé «axe d'émission», perpendiculaire à la fenêtre 3 de sortie et issu d'un point 27 de cette fenêtre 3, appelé «point d'émergence du faisceau laser», ce point étant défini par un repère 28 porté par la fenêtre 3 de sortie. Le laser 2 est monté sur sa platine 20 de façon que l'axe 26 d'émission du faisceau laser soit parallèle au plan de la figure 1 et perpendiculaire à une normale à la fenêtre d'entrée 8. Le miroir mobile 21 peut alors être un miroir plan situé en regard de la fenêtre de sortie 3 et de la fenêtre d'un axe contenu dans le plan de ce miroir et parallèle aux fenêtres de sortie 3 et d'entrée 8.

La lunette de visée 22 et les moyens séparateurs de faisceau 23 sont montés sur une platine auxiliaire 29 déplaçable par rapport à la platine 20, devant la fenêtre 3 de sortie du faisceau laser, suivant une direction perpendiculaire au faisceau laser et parallèle au plan de la figure 1, au moyen d'un ensemble de vis de réglage et blocage 30 et permettant en outre d'immobiliser la platine auxiliaire 29 par rapport à la platine 20, et suivant une autre direction perpendiculaire au plan de la figure 1 au moyen d'une vis de réglage 31.

Les moyens séparateurs de faisceau 23 consistent en un cube séparateur transparent comportant un plan diagonal 32 semi-réfléchissant qui constitue donc une lame semi-réfléchissante.

Le cube séparateur 23 est monté sur la platine auxiliaire 29 de façon que la lame semi-réfléchissante 32 soit coupée par l'axe 26 d'émission du faisceau laser et forme avec celui-ci un angle de 45°, le cube 23 ayant donc ainsi deux faces parallèles à la fenêtre 3 de sortie du faisceau laser. La lunette de visée 22 comporte successivement un viseur 33 muni d'un réticule en croix 34, un oculaire 35 et un objectif 36. Ce dernier est situé en regard de la lame semi-réfléchissante 32. L'axe 37 de l'objectif 36, appelé «axe de visée», est perpendiculaire à l'axe 38 de l'oculaire 35. Un miroir plan semi-transparent 39 est situé à l'intersection de ces axes 37 et 38, à 45° de ceux-ci. Une face 40 du cube séparateur 23, située à l'arrière de celui-ci par rapport à l'objectif 36, est rendue totalement réfléchissante et forme ainsi un miroir plan. La lunette de visée 22 est munie d'une source auxiliaire 41 située derrière le miroir semi-transparent 39 par rapport à l'objectif 36.

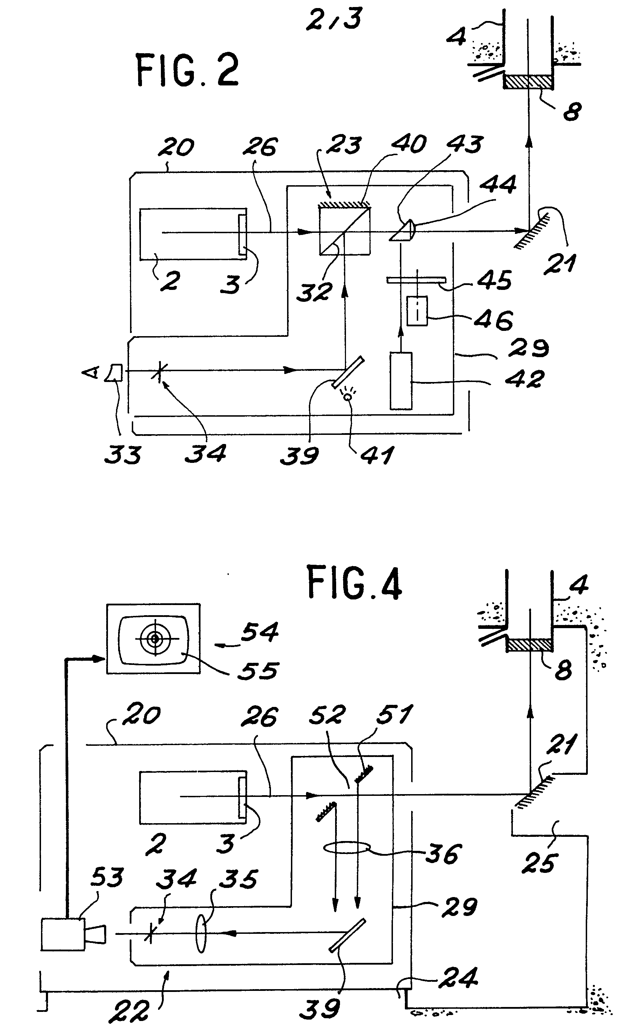

Comme on l'a représenté schématiquement sur la figure 2, la platine auxiliaire 29 porte en outre des moyens d'éclairage de l'orifice 13 de la buse 12 (figure 1), moyens qui comprennent une source lumineuse auxiliaire 42 et des moyens de déflexion de lumière 43. Il est préférable de ne pas utiliser, pour assurer l'éclairage de la buse, la source auxiliaire 41, parce qu'elle n'est pas suffisamment intense et que son utilisation accroîtrait le bruit par réflexion sur l'objectif de la lunette. La source lumineuse auxiliaire 42 est par exemple constituée par un laser à He—Ne et les moyens de déflexion de lumière sont par exemple constitués par un prisme à réflexion totale dont le plan réflecteur est opaque, pour éliminer toute lumière parasite, et dont la face de sortie, tournée vers le miroir mobile 21, est munie d'une lentille convergente 44 si nécessaire, pour obtenir un éclairage suffisante. Le prisme 43 est disposé sur l'axe 26 d'émission, à l'opposé du laser de puissance 2 par rapport au cube séparateur 23. En outre, les arêtes du prisme ont des dimensions inférieures à celles du cube séparateur 23. Les arêtes de ce cube sont par exemple dix fois plus grandes que celles du prisme 43. Le laser 42 à He—Ne est disposé sur la platine auxiliaire 29 de façon à envoyer un faisceau lumineux en direction du prisme 43, faisceau qui est alors dévié en direction du miroir mobile 21 puis injecté dans le canal tubulaire 4. Un disque transparent inhomogène 45, associé à un moteur 46 prévu pour le mettre en rotation, est disposé entre le prisme 43 et le laser 42 à He—Ne, transversalement au faisceau que ce dernier est suceptible d'émettre, de façon à supprimer la cohérence spatiale de ce faisceau et donc les phénomènes de granularité résultant de la réflexion de ce faisceau sur un objet.

Sur la figure 3, on a représenté schématiquement la tête d'usinage 10 terminée par la buse 12. A l'intérieur de cette tête d'usinage 10, se trouve le support 15 sur lequel sont montés la lentille 14 de focalisation ainsi qu'un premier anneau 47 et un second anneau 48 de diamètre inférieur au premier. Le premier anneau 47 entoure la lentille de focalisation 14 et le second anneau 48 est situé du côté opposé à l'orifice 13 de la buse 12 par rapport à la lentille 14. En outre, les deux anneaux 47 et 48 sont montés sur leur support commun 15 de façon qu'ils admettent un même axe 49 et que celui-ci passe par l'orifice 13. La lentille 14 est également montée sur le support 15 de façon à admettre cet axe 49 comme axe optique. L'axe 49 commun aux deux anneaux 47 et 48 forme un axe de visée de l'orifice 13 qui permet le remplacement de la visée de ce dernier par une visée suivant ledit axe de visée 49.

Sans faire fonctionner le laser de puissance 2 (figure 1) on peut observer dans le viseur 33 de la lunette 22 l'image du point d'émergence 27 de la fenêtre de sortie 3, en faisant fonctionner la source auxiliaire 41. En effet, la lumière émise par cette dernière traverse le miroir semi-transparent 39, l'objectif 36, puis la lame semi-réfléchissante 32 et se réfléchit alors successivement sur la face totalement réfléchissante 40 du cube séparateur 23 en direction de la lame semi-réfléchissante 32, sur cette dernière en direction de la fenêtre 3 de sortie, sur cette fenêtre 3 en direction de la lame semi-réfléchissante 32, sur cette dernière en direction de la face totalement réfléchissante 40, puis sur cette face totalement réfléchissante 40 en direction de la lame réfléchissante 32 qu'elle traverse ainsi que l'objectif 36, pour se réfléchir sur le miroir semi-transparent 39 en direction du viseur 33.

De même, en faisant fonctionner le laser 42 à He—Ne (figure 2), on peut observer dans le viseur 33 l'image des deux anneaux 47 et 48 (figure 3) qui permettent de repérer l'orifice 13 de la buse 12. En effet, la lumière émise par le laser 42 à He—Ne est envoyée par le prisme à réflexion totale 43 en direction du miroir mobile 21 puis injectée par celui-ci dans le canal tubulaire 4 et propagée, grâce aux miroirs auxiliaires 18 (figure 1), en direction des anneaux 47 et 48 (figure 3), se réfléchit sur ceux-ci, parvient à nouveau, en raison du principe du retour inverse de la lumière, sur le miroir mobile 21, se réfléchit sur ce dernier en direction de la lame semi-réfléchissante 32, se réfléchit sur cette dernière en direction du miroir semi-transparent 39 et parvient enfin au viseur 33.

Pour aligner, ou positionner, le faisceau émis par le laser de puissance 2, sans faire fonctionner ce dernier, on procède de la façon suivante: à l'aide de la lunette de visée 22 et en faisant fonctionner la source auxiliaire 41 (figure 1), on fait une visée du point d'émergence 27 de la fenêtre 3 définie par le repère 28, c'est-à-dire qu'on fait coïncider l'image de ce point d'émergence 27 avec le centre du réticule 34, en déplaçant la platine auxiliaire 29 par rapport au laser de puissance 2. La coïncidence étant réalisée, on immobilise la platine auxiliaire 29 par rapport à la platine 20 portant le laser 2. On peut alors affirmer que le faisceau lumineux 50 émis par la source auxiliaire 41 coïncide, après refléxion sur la lame semi-réfléchissante 32, avec l'axe 26 d'émission et «simule» donc cet axe 26 d'émission.

A l'aide de la lunette de visée 22 et en faisant fonctionner le laser 42 à He—Ne (figure 2), on fait ensuite une visée de l'orifice 13 de la buse 12: en déplaçant la platine 20 portant le laser de puissance 2 par rapport au châssis 24 et/ou en faisant pivoter le miroir mobile 21 par rapport à son support 25, on fait coïncider l'image de l'orifice 13 avec le centre du réticule 34. En fait, la visée de l'orifice 13 est remplacée par la visée équivalente des deux anneaux 47 et 48, c'est-à-dire par la mise en coïncidence des images des centres de ces deux anneaux, définis par l'axe de visée 49 commun à ces anneaux 47 et 48, avec le centre du réticule 34. Du fait de la double coïncidence des

images respectives du point d'émergence 27 et de l'orifice 13 (ou de son équivalent obtenu avec les deux anneaux 47 et 48) avec le centre du réticule 34, on est sûr que le laser de puissance 2 est correctement positionné pour que, lorsqu'il fonctionne, le faisceau laser émis par lui soit aligné sur l'orifice 13 de la bus 12, c'est-à-dire passe par cet orifice 13 pour atteindre la pièce 5 à usiner et ne frappe donc pas la buse à d'autres endroits, ce qui abimerait cette buse.

Le réglage d'alignement, ou de positionnement, du faisceau laser que l'on vient d'expliquer et que l'on peut appeler «réglage statique» puisqu'il est effectué sans faire fonctionner le laser de puissance 2, peut être contrôlé lorsque ce dernier fonctionne et rectifié par un autre réglage appelé «réglage dynamique», étant donné que cet autre réglage est effectué en cours d'utilisation du laser de puissance 2. Ce réglage dynamique va maintenant être expliqué en référence à la figure 4.

Avant de faire fonctionner le laser de puissance 2, on remplace les moyens séparateurs de faisceau 23 par un miroir plan annulaire 51 pourvu d'une ouverture centrale 52. Ce miroir annulaire 51 est fixé sur la platine auxiliaire 29, elle-même étant immobilisée par rapport à la platine 20 portant le laser de puissance 2, de telle façon que ledit miroir annulaire 51 se trouve en regard du miroir semi-transparent 39, soit parallèle à ce dernier et soit incliné à 45° sur l'axe d'émission 26 du faisceau laser et de façon que son ouverture centrale 52 soit traversée par cet axe d'émission 26. On peut alors faire fonctionner le laser de puissance 2 pour usiner la pièce 5 (le faisceau laser traversant alors l'ouverture centrale 52), puis, lorsqu'on désire contrôler l'alignement réalisé, utiliser ce laser 2 en régime impulsionnel et à un très bas niveau d'énergie, en tant que source lumineuse d'éclairage de l'orifice 13 de la buse 12, de façon à vérifier que l'image de cet orifice 13 coïncide toujours avec le centre du réticule 34. Si les impacts laser tombent autour de l'orifice de la buse, ils provoquent une émission lumineuse par échauffement localisé du métal; cette source de lumière éclaire l'orifice 13 de la buse 12. Si les impacts passent par l'orifice 13, il n'existe pas de source de lumière et l'alignement est réalisé. Dans ce cas, il est possible de disposer une pièce métallique à l'extrémité de la buse 13 et l'on se retrouve alors dans l'hypothèse où les impacts laser tomberaient au voisinage de l'orifice 13.

Le contrôle de l'alignement peut être effectué par observation directe à travers la lunette de visée 22 our par l'intermédiaire d'une caméra de télévision 53 montée à la suite du réticule 34 et associée à un récepteur de télévision 54 pourvu d'un écran de visualisation 55, ce qui rend les observations moins pénibles.

Une partie de la lumière émise par les impacts du laser de puissance 2 sur la pièce 5 à usiner est renvoyée à travers l'orifice 13 en direction du miroir mobile 21, par ce miroir mobile 21 en direction du miroir annulaire 51, par ce dernier en direction du miroir semi-transparent 39 et enfin par ce dernier en direction de la caméra 53. Lorsque l'image de l'orifice 13 ne coïncide pas avec le centre du réticule 34, on peut rectifier l'alignement du faisceau laser en déplaçant la platine 20 portant le laser 2 par rapport au châssis 24 et/ou en faisant pivoter le miroir mobile 21 par rapport à son support 25, jusqu'à ce que le faisceau laser passe correctement par l'orifice 13 de la buse 12.

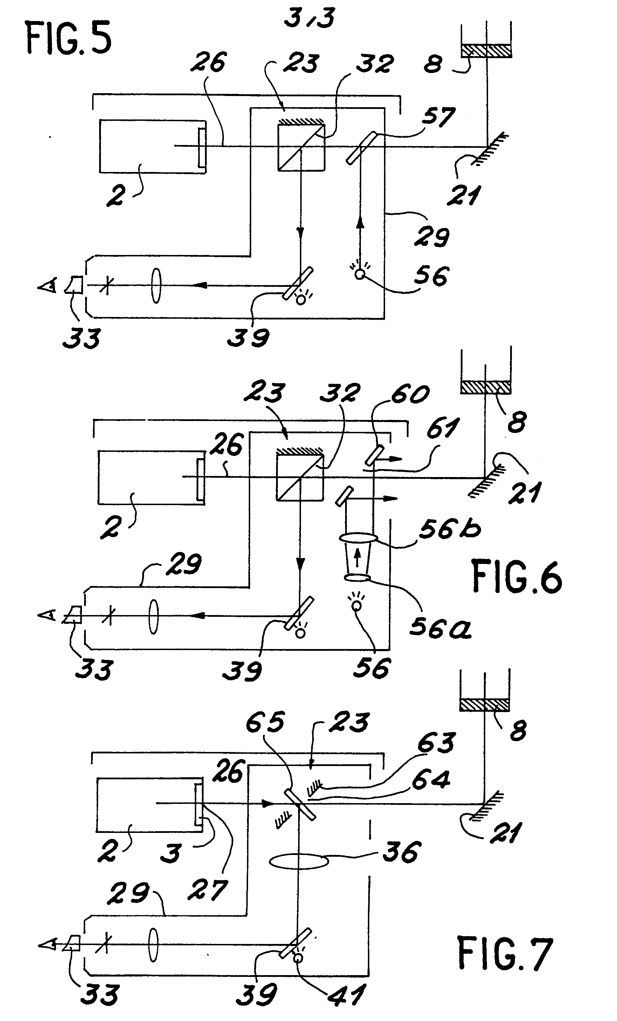

Sur la figure 5, on a représenté schématiquement un autre mode de réalisation particulier des moyens d'éclairage de l'orifice 13 de la buse 12. Le laser 42 à He–Ne et le prisme 43, représentés sur la figure 2, sont respectivement remplacés par une source de lumière incohérente 56 et par une lame semi-transparente 57. Cette dernière est fixée sur la platine auxiliaire 29, à l'opposé du cube séparateur 23 par rapport au laser de puissance 2 et de façon à couper l'axe d'émission 26 du faisceau laser. Les dispositions respectives de cette lame semi-transparente 57 et de la source de lumière incohérente 56 sont par ailleurs telles que la lumière émise par cette source 56 atteigne la lame semi-transparente 57 et s'y réfléchissen en direction du miroir mobile 21. Cette lumière parvient ensuite, comme on l'a expliqué plus haut, aux deux anneaux 47 et 48 (figure 3), se réfléchit sur ceux-ci et retourne, selon le principe du retour inverse de la lumière, sur la lame semi-transparente 57, traverse en partie celle-ci puis est défléchie par la lame semi-réfléchissante 32 des moyens séparateurs de faisceau 23 en direction du miroir semi-transparent 39 qui l'envoie dans le viseur 33. La source de lumière incohérente 56 est par exemple une lampe à arc au mercure.

Sur la figure 6 on a représenté schématiquement un autre mode de réalisation particulier des moyens d'éclairage de l'orifice 13 de la buse 12. Dans cet autre mode de réalisation particulier, la source de lumière incohérente 56, associée à un condenseur 56a et à un objectif 56b, est conservée et le prisme 43 (figure 2) est remplacé par un miroir plan annulaire 60 pourvu d'une ouverture centrale 61. Ce miroir annulaire 60 est fixé sur la platine auxiliaire 29 à l'opposé du laser de puissance 2 par rapport aux moyens séparateurs de faisceau 23 et de façon que l'axe d'émission 26 du faisceau laser traverse ladite ouverture centrale 61. Par ailleurs, les positions respectives du miroir annulaire 60 et de la source de lumière incohérente 56 sont telles que la lumière émise par cette source 56 se réfléchisse sur le miroir annulaire 60 en direction du miroir mobile 21. Cette lumière parvient alors, comme on l'a expliqué plus tôt, aux deux anneaux 47 et 48, est réfléchie par eux et retourne, selon le principe de retour inverse de la lumière, en direction du miroir annulaire 60 qu'elle peut traverser en partie grâce à l'ouverture centrale 61 pour atteindre la lame semi-réfléchissante 32 et s'y réfléchir en direction du miroir semi-transparent 39 qui l'envoie alors dans le viseur 33.

Sur la figure 7, on a représenté schématiquement un autre mode de réalisation particulier, des moyens séparateurs de faisceau 23. Ceux-ci comprennent un miroir plan annulaire 63 pourvu d'une ouverture centrale 64 et une lame semi-réfléchissante 65 perpendiculaire au miroir annulaire 63. Celui-ci est fixé sur la platine auxiliaire 29 en regard du miroir semi-transparent 39. Il forme un angle de 45 ° avec l'axe 26 d'émission du faisceau laser et son ouverture centrale 64 est traversée par cet axe d'émission 26. La lame semi-réfléchissante 65 est également traversée par l'axe d'émission 26. Pour ce faire, cette lame 65 est choisie de taille suffisamment petite pour être insérée dans l'ouverture centrale 64.

La lame semi-réfléchissante 65 est prévue pour faire la visée du point d'émergence 27 lorsque celui-ci est éclairé au moyen de la source auxiliaire 41: la lumière émise par celle-ci traverse le miroir semi-transparent 39 et se réfléchit successivement sur la lame semi-réfléchissante 65, sur la fenêtre de sortie 3, à nouveau sur la lame semi-réfléchissante 65 et enfin sur le miroir semi-transparent 39 pour parvenir au viseur 33. Le miroir annulaire 63 est destiné à faire la visée de l'orifice 13 de la buse 12 (figure 1) bien entendu lorsque les anneaux 47 et 48 (figure 3) sont éclairés. Ce miroir annulaire 63 est prévu pour capter la lumière défléchie par le miroir mobile 21 et provenant du canal tubulaire 4, et pour envoyer cette lumière en direction du miroir semi-transparent 39 de façon que cette lumière parvienne au viseur 33. Il est à noter que le miroir annulaire 63 permet également d'effectuer le réglage dynamique de l'alignement du faisceau laser expliqué plus haut. Pour effectuer ce réglage, il suffit d'ôter la lame semi-réfléchissante 65 et le miroir annulaire 63 se trouve alors directement en bonne position pour le réglage dynamique.

Si la source de lumière utilisée est un laser hélium-néon, l'éclairage est suffisamment puissant pour que la partie du faisceau lumineux passant par la lame 65 via la fenêtre 3 vienne éclairer la lentille de focalisation 14, ce qui produit une tache sur cette lentille. Le miroir annulaire est alors orienté pour que l'image de cette tache soit centrée sur le réticule de la lunette; ainsi, l'axe optique du laser peut-il être centré sur la lentille.

Dans les exemples de réalisation qui précèdent, on a considéré des moyens optiques de visée et immobilisé ceux-ci par rapport au laser de puissance 2 (figure 1) de façon que l'axe de visée 37 forme respectivement avec l'axe d'émission 26 du faisceau laser et avec le faisceau lumineux issu de l'orifice 13 de la buse 12 (ou le faisceau lumineux équivalent en considérant non plus cet orifice 13 mais les deux anneaux 47 et 48), des angles supplémentaires tous deux égaux à 90°. On peut bien entendu choisir les moyens optiques de visée et orienter ceux-ci par rapport au laser 2, de façon que ces deux angles demeurent supplémentaires sans être égaux à 90°.

## Revendications

1. Dispositif d'alignement d'un faisceau laser sur une cible (13), ce faisceau laser admettant un point d'émergence (27) sur le laser (2) et un axe d'émission (26) passant par ce point d'émergence, ce dispositif comprenant des moyens mobiles (20, 21) de déplacement du faisceau laser et des moyens optiques de visée (22, 23), dispositif caractérisé en ce que les moyens optiques de visée (22, 23) sont aptes à effectuer des visées dans deux directions opposées et immobilisables par rapport au laser (2) et en ce que le laser et les moyens optiques de visée (22, 23) sont aptes à effectuer des déplacements relatifs, afin d'effectuer une visée du point d'émergence (27) selon l'une des deux directions, en utilisant des déplacements relatifs du laser (2) et des moyens optiques de visée (22, 23), puis d'immobiliser ces derniers par rapport au laser (2) et enfin d'effectuer une visée de la cible (13) selon l'autre direction, en utilisant des mouvements des moyens (20, 21) de déplacement du faisceau laser, de façon que celui-ci atteigne la cible (13) lorsqu'il est émis par le laser (2).

2. Dispositif selon la revendication 1, caractérisé en ce que les moyens mobiles de déplacement du faisceau laser comprennent une platine mobile (20) portant le laser (2).

3. Dispositif selon l'une quelconque des revendications 1 et 2, caractérisé en ce que les moyens mobiles de déplacement du faisceau laser comprennent en outre un miroir mobile (21) prévu pour capter le faisceau laser et pour diriger celui-ci sur la cible (13).

4. Dispositif selon l'une quelconque des revendications 1 à 3, caractérisé en ce que les moyens optiques de visée comprennent une lunette de visée (22) et des moyens (23) séparateurs de faisceau rendus fixes par rapport à la lunette de visée (22) et aptes, d'une part, à défléchir vers la lunette de visée un faisceau lumineux issu du point d'émergence (27) lorsque celui-ci est éclairé afin d'effectuer la visée de ce point d'émergence et d'autre part, à défléchir vers la lunette de visée (22) un faisceau lumineux issu de la cible (13) lorsque celle-ci est éclairée afin d'effectuer la visée de ladite cible.

5. Dispositif selon la revendication 4, caractérisé en ce que les moyens (23) séparateurs de faisceau comportent une lame semi-réfléchissante (32) inclinée sur l'axe (26) d'émission du faisceau laser et rigidement solidaire d'un miroir (40) opposé à la lunette de visée par rapport à la lame semi-réfléchissante (32).

6. Dispositif selon la revendication 4, caractérisé en ce que les moyens (23) séparateurs de faisceau comportent une lame semi-réfléchissante (65) inclinée sur l'axe (26) d'émission du faisceau laser et rigidement solidaire d'un miroir annulaire (69) perpendiculaire à la lame semi-réfléchissante (65) et entourant celle-ci.

7. Dispositif selon l'une quelconque des revendications 1 à 6, caractérisé en ce que la cible (13) est éclairée au moyen d'une source lumineuse auxiliaire (42, 56) associée à des moyens de déflexion de lumière (43, 57, 60) conçus pour permettre l'atteinte desdits moyens optiques de visée (22, 23) par un faisceau lumineux issu de la cible (13) lorsqu'elle est éclairée par la source lumineuse auxiliaire (42, 56).

8. Dispositif selon l'une quelconque des revendications 1 à 7, caractérisé en ce que la cible (13) est définie par un axe de visée (49) passant par cette cible et déterminé par deux repères (47, 48) rigidement solidaires de la cible, de façon à permettre le remplacement de la visée de cette cible par une visée suivant ledit axe de visée (49).

9. Dispositif selon l'une quelconque des revendications 1 à 8, caractérisé en ce que la cible est constituée par l'orifice (13) d'une buse (12) associée à des moyens (14) de focalisation du faisceau laser à travers ledit orifice et située à une extrémité d'un canal (4) prévu pour la propagation du faisceau laser avant que celui-ci n'atteigne la buse (12) et en ce que le laser (2), les moyens (20, 21) de déplacement du faisceau laser et les moyens optiques de visée (22, 23) sont situés à l'extérieur du canal (4), du côté de l'autre extrémité de celui-ci.

10. Procédé d'alignement d'un faisceau laser sur une cible (13), ce faisceau laser admettant un point d'émergence (27) sur le laser (2), procédé dans lequel on munit le laser (2) de moyens optiques de visée (22, 23) comprenant une source lumineuse auxiliaire (41), procédé caractérisé en ce que le laser est monté sur une platine (20) en ce que les moyens optiques (22, 23) sont prévus pour effectuer des visées dans deux directions opposées et pour qu'un faisceau lumineux issu de la source auxiliaire se propage suivant l'une des deux directions, et en ce que:

— on effectue, suivant cette direction, une visée du point d'émergence du faisceau laser ainsi éclairé par la source auxiliaire, à l'aide d'une orientation des moyens optiques de visée (22, 23) par rapport au laser, de manière à simuler le faisceau laser par le faisceau issu de la source auxiliaire (41),

— on immobilise les moyens optiques de visée par rapport au laser, et

— on effectue une visée, suivant l'autre direction, de la cible éclairée à cet effet, en utilisant des mouvements de la platine (20) et/ou d'un miroir (21) d'orientation du faisceau laser.

11. Procédé de mise en œuvre du dispositif selon la revendication 4, caractérisé en ce que pour contrôler en outre l'alignement réalisé, in remplace les moyens (23) séparateurs de faisceau par un miroir annulaire (51) disposé de façon à être traversé par le faisceau laser lorsque le laser (2) fonctionne et à défléchir vers la lunette de visée (22) un faisceau lumineux issu de la cible (13) éclairée par le laser (2).

**Patentansprüche**

1. Vorrichtung zum Ausrichten eines Laserstrahls auf ein Ziel (13), wobei der Laserstrahl einen Austrittspunkt (27) an dem Laser (2) und eine durch diesen Austrittspunkt hindurchgehende Emissionsachse (26) aufweist und die Vorrichtung bewegbare Verschiebemittel (20, 21) für den Laserstrahl und optische Visiermittel (22, 23) umfasst, dadurch gekennzeichnet, dass die optischen Visiermittel (22, 23) das Visieren in zwei entgegengesetzten und in Bezug auf den Laser (2) festsetzbaren Richtungen durchführen können und dass der Laser und die optischen Visiermittel (22, 23) geeignet sind, relative Verschiebungen durchzuführen, um unter Verwendung der relativen Verschiebungen des Lasers (2) und der optischen Visiermittel (22, 23) das Visieren des Austrittspunktes (27) längs einer der zwei Richtungen durchzuführen, dann die optischen Visiermittel in Bezug auf den Laser (2) festzusetzen und schliesslich das Visieren des Ziels (13) längs der anderen Richtung durchzuführen, wobei Bewegungen der Verschiebemittel (20, 21) des Laserstrahls derart verwendet werden, dass dieser das Ziel (13) erreicht, wenn er von dem Laser (2) ausgesandt wird.

2. Vorrichtung nach Anspruch 1, dadurch gekennzeichnet, dass die bewegbaren Verschiebemittel des Laserstrahls einen bewegbaren Tisch (20) umfassen, der den Laser (2) trägt.

3. Vorrichtung nach Anspruch 1 oder 2, dadurch gekennzeichnet, dass die bewegbaren Verschiebemittel des Laserstrahls ferner einen bewegbaren Spiegel (21) umfassen, der vorgesehen ist, um den Laserstrahl aufzufangen und diesen auf das Ziel (13) zu richten.

4. Vorrichtung nach einem der Ansprüche 1 bis 3, dadurch gekennzeichnet, dass die optischen Visiermittel ein Zielfernrohr (22) und Strahltrennmittel (23) umfassen, die in Bezug auf das Zielfernrohr (22) fest sind und einerseits einen von dem Austrittspunkt (27) bei dessen Beleuchtung ausgehenden Lichtstrahl zu dem Zielfernrohr ablenken können, um das Visieren dieses Austrittspunkts durchzuführen, und andererseits einen von dem Ziel (13) bei dessen Beleuchtung ausgehenden Lichtstrahl zu dem Zielfernrohr (22) umlenken können, um das Anvisieren des Ziels durchzuführen.

5. Vorrichtung nach Anspruch 4, dadurch gekennzeichnet, dass die Strahltrennmittel (23) eine halbdurchlässige Platte (32) umfassen, die auf der Emissionsachse (26) des Laserstrahls geneigt und mit einem Spiegel (40) starr verbunden ist, der sich dem Zielfernrohr in Bezug auf die halbdurchlässige Platte (32) gegenüberliegend befindet.

6. Vorrichtung nach Anspruch 4, dadurch gekennzeichnet, dass die Strahltrennmittel (23) eine halbdurchlässige Platte (65) umfassen, die auf der Emissionsachse (26) des Laserstrahls geneigt und mit einem Ringspiegel (69) starr verbunden ist, der senkrecht zu der halbdurchlässigen Platte (65) ist und diese umgibt.

7. Vorrichtung nach einem der Ansprüche 1 bis 6, dadurch gekennzeichnet, dass das Ziel (13) mittels einer Hilfslichtquelle (42, 56) beleuchtbar ist, die Lichtumlenkmittel (43, 57, 60) zugeordnet ist, die so ausgebildet sind, dass die optischen Visiermittel (22, 23) von einem von dem Ziel (13) bei dessen Beleuchtung durch die Hilfslichtquelle (42, 56) ausgehenden Lichtstrahl erreicht werden können.

8. Vorrichtung nach einem der Ansprüche 1 bis 7, dadurch gekennzeichnet, dass das Ziel (13) durch eine Visierachse (49) festgelegt ist, die durch dieses Ziel hindurchgeht und von zwei Markierungen (47, 48) bestimmt ist derart, dass das Anvisieren dieses Ziels durch ein Visieren längs der Visierachse (49) ersetzt werden kann.

9. Vorrichtung nach einem der Ansprüche 1 bis 8, dadurch gekennzeichnet, dass das Ziel von der Öffnung (13) einer Düse (12) gebildet ist, die Scharfeinstellmitteln (14) für den Laserstrahl durch die Öffnung hindurch zugeordnet ist und sich an einem Ende eines Kanals (4) befindet, der für die Ausbreitung des Laserstrahls vorgesehen ist, bevor dieser die Düse (12) erreicht, und dass sich der Laser (2), die Verschiebemittel (20, 21) für den Laserstrahl und die optischen Visiermittel (22, 23) ausserhalb des Kanals (4) auf der Seite dessen anderen Endes befinden.

10. Verfahren zum Ausrichten eines Laserstrahls auf ein Ziel (13), wobei der Laserstrahl einen Austrittspunkt (27) an dem Laser (2) aufweist, und man den Laser (2) mit optischen Visiermitteln (22, 23) versieht, die eine Hilfslichtquelle (41) umfassen, dadurch gekennzeichnet, dass der Laser auf einem Tisch (20) angebracht ist, dass die optischen Mittel (22, 23) vorgesehen sind, um das Visieren in zwei entgegengesetzten Richtungen durchzuführen,und dass sich ein von der Hilfsquelle ausgehender Lichtstrahl längs einer der zwei Richtungen fortpflanzt, und dass
– man das Anvisieren des somit durch die Hilfsquelle beleuchteten Austrittspunktes des Laserstrahls längs dieser Richtung mittels einer Ausrichtung der optischen Visiermittel (22, 23) in Bezug auf den Laser derart durchführt, dass der Laserstrahl durch den von der Hilfsquelle (41) ausgesandten Strahl nachgebildet wird,
– man die optischen Visiermittel in Bezug auf den Laser festlegt, und
– man das Anvisieren des hierfür beleuchteten Ziels längs der anderen Richtung durchführt, wobei Bewegungen des Tisches (20) und/oder eines Ausrichtspiegels (21) für den Laserstrahl verwendet werden.

11. Verfahren zur Betriebsdurchführung der Vorrichtung nach Anspruch 4, dadurch gekennzeichnet, dass man, um ferner die durchgeführten Ausrichtung zu überwachen, die Strahltrennmittel (23) durch einen Ringspiegel (51) ersetzt, der so angeordnet ist, dass er bei eingeschaltetem Laser (2) von dem Laserstrahl durchquert wird und einen von dem durch den Laser (2) beleuchteten Ziel (13) ausgehenden Lichtstrahl zu dem Zielfernrohr (22) umlenkt.

## Claims

1. Device for aligning a laser beam on a target (13), this laser beam accepting a point of emergence (27) on the laser (2) and an axis of emission (26) passing through this point of emergence, this device comprising movable means (20, 21) for displacing the laser beam and optical sighting means (22, 23), the device being characterized in that the optical sighting means (22, 23) are capable of effecting sightings in two opposite directions and immobilizable in relation to the laser (2), and in that the laser and the optical sighting means (22, 23) are capable of effecting relative displacements, in order to effect a sighting of the point of emergence (27) in one of the two directions, by utilizing relative displacements of the laser (2) and the optical sighting means (22, 23) and then to immobilize the latter in relation to the laser (2) and finally to effect a sighting of the target (13) in the other direction, by utilizing movements of the means (20, 21) for displacing the laser beam, in such a manner that the latter strikes the target (13) when the beam is emitted by the laser (2).

2. Device according to claim 1, characterized in that the movable means for displacing the laser beam comprise a movable plate (20) carrying the laser (2).

3. Device according to either one of claims 1 and 2, characterized in that the movable means for displacing the laser beam further comprise a movable miror (21) provided to detect the laser beam and to direct the latter onto the target (13).

4. Device according to any one of claims 1 to 3, characterized in that the optical sighting means comprise a sighting telescope (22) and beam-separating means (23) made fixed in relation to the sighting telescope (22) and capable, on the one hand, of deflecting towards the sighting telescope a luminous beam given out from the point of emergence (27) when the latter is illuminated in order to effect the sighting of this point of emergence and, on the other hand, of deflecting towards the sighting telescope (22) a luminous beam given out from the target (13) when the latter is illuminated in order to effect the sighting of the said target.

5. Device according to claim 4, characterized in that the beam-separating means (23) comprise a semi-reflecting plate (32) inclined to the axis (26) of emission of the laser beam and rigidly forming a solid unit with a mirror (40) opposite the sighting telescope in relation to the semi-reflecting plate (32).

6. Device according to claim 4, characterized in that the beam-separating mean (23) comprise a semi-reflecting plate (65) inclined to the axis (26) of emission of the laser beam and rigidly forming a solid unit with an annular mirror (69) perpendicular to the semi-reflecting plate (65) and surrounding the latter.

7. Device according to any one of claims 1 to 6, characterized in that the target (13) is illuminated by means of an auxiliary luminous source (42, 56) associated with light-deflecting means (43, 57, 60) designed to permit the said optical sighting means (22, 23) to be struck by a luminous beam given out from the target (13) when it is illuminated by the auxiliary luminous source (42, 56).

8. Device according to any one of claims 1 to 7, characterized in that the target (13) is defined by a sighting axis (49) which passes through this target and which is determined by two register marks (47, 48) rigidly forming a solid unit with the target, in such a manner as to permit the replacement of the sighting of this target by a sighting following the said sighting axis (49).

9. Device according to any one of claims 1 to 8, characterized in that the target is formed by the orifice (13) of a duct (12) associated with means (14) for focusing the laser beam through the said orifice and situated at one end of a channel (4) provided for the propagation of the laser beam before the latter reaches the duct (12), and in that the laser (2), the means (20, 21) for displacing the laser beam and the optical sighting means (22, 23) are situated outside the channel (4), on the side of the other end of the latter.

10. Process for aligning a laser beam on a target (13), this laser beam accepting a point of emergence (27) on the laser (2), in which process the laser (2) is equipped with optical sighting means (22, 23) comprising an auxiliary luminous source (41), the process being characterized in that the laser is mounted on a plate (20), in that the optical means (22, 23) are provided for the purpose of effecting sightings in two opposite directions and in order that a luminous beam given out from the auxiliary source should propagate in one of the two directions, and in that;

– there is carried out, in this direction, a sighting of the point by the auxiliary source, by means of an orientation of the optical sighting means (22, 23) in relation to the laser, in such a manner as to simulate the leaser beam by the beam given out from the auxiliary source (41),

– the optical sighting means are immobilized in relation to the laser, and

– there is carried out a sighting, in the other direction, of the target illuminated for this purpose, by utilizing movements of the plate (20) and/or of a mirror (21) for the orientation of the laser beam.

11. Process for utilizing the device according to claim 4, characterized in that, in order moreover to check the alignment carried out, the beam-separating means (23) are replaced by an annular mirror (51) disposed in such a manner as to be traversed by the laser beam when the laser (2) operates and to deflect towards the sighting telescope (22) a luminous beam given out from the target (13) illuminated by the laser (2).

FIG.3

FIG.1

0 119 883

1,3

2/3

# FIG. 2

# FIG.4

0 119 883

**FIG.5**

**FIG.6**

**FIG.7**

15